(19) Europäisches Patentamt
European Patent Office
Office européen des brevets

(11) **EP 1 820 778 A2**

(12) **EUROPÄISCHE PATENTANMELDUNG**

(43) Veröffentlichungstag:
**22.08.2007   Patentblatt 2007/34**

(51) Int Cl.:
**C01G 9/03** (2006.01)

(21) Anmeldenummer: 06124096.6

(22) Anmeldetag: **15.11.2006**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(30) Priorität: **16.12.2005   DE 102005060121**

(71) Anmelder: **Degussa GmbH**
**40474 Düsseldorf (DE)**

(72) Erfinder:
• **Zimmermann, Guido**
**50321, Brühl (DE)**
• **Katusic, Stipan**
**65779, Kelkheim (DE)**
• **Krämer, Michael**
**61137, Schöneck (DE)**
• **Miess, Horst**
**63796, Kahl (DE)**
• **Yilmaz, Nuh**
**63450, Hanau (DE)**
• **Michael, Günther Dr.**
**63791, Karlstein (DE)**

(54)   **Verfahren zur Herstellung von Zinkoxidpulver**

(57)   Verfahren zur Herstellung von Zinkoxidpulver, umfassend die Schritte

a) Erzeugen eines Zinkdampf enthaltenden Stromes in einer Verdampfungszone
b) Oxidation des Zinkdampfes durch Reaktion mit einem Sauerstoff enthaltenden Gas unter Bildung von Zinkoxidpulver in einer Oxidationszone,
c) Abkühlung des Reaktionsgemisches mittels Wasser oder eines Inertgases und Abtrennung des Zinkoxidpulvers in einer Abkühlungs-/Isolierungszone,

wobei man
aa) in der Verdampfungszone ein Gasstrom aus einem Inertgas und einem Brenngas durch eine Zinkschmelze, die eine Temperatur von 750°C bis 850°C aufweist, unter Bildung von Zinkdampf leitet, wobei der Anteil an Brenngas 1 bis 50 Vol.-%, bezogen auf die Summe von Inertgas und Brenngas, beträgt und wobei der molare Quotient von Zinkdampf zu Brenngas 0,01 bis 50, beträgt und
bb) in der Oxidationszone zu dem Gasstrom aus Zinkdampf, Brenngas und Inertgas einen zweiten Gasstrom gibt, der ein Sauerstoff enthaltendes Gas und Wasserdampf umfasst, in einer Menge gibt, dass die Temperatur in der Oxidationszone 500 bis 1100°C beträgt, wobei
- der Gehalt an Sauerstoff wenigstens ausreicht um alles Brenngas aus der Verdampfungszone und den Zinkdampf umzusetzen, der Wasserdampf durch die Reaktion eines Brenngases mit dem Sauerstoff enthaltenden Gas erzeugt wird, das in die Oxidationszone geführt wird.

EP 1 820 778 A2

**Beschreibung**

Die Anmeldung betrifft ein Verfahren zur Herstellung von Zinkoxidpulver.

Zinkoxidpulver finden Verwendung in Farben, Lacken, in Harzen und Fasern. Ein wichtiges Segment stellt die Verwendung von Zinkoxidpulvern im kosmetischen Bereich, besonders als Bestandteil von Sonnenschutzformulierungen, dar.

Prinzipiell stehen zwei Möglichkeiten zur Synthese von Zinkoxidpulvern zur Verfügung, nasschemische Prozesse und Gasphasenprozesse. In der Regel dienen bei den nasschemischen Prozessen solche Zinkverbindungen als Ausgangsmaterial, die thermisch in Zinkoxid überführt werden können, wie zum Beispiel Zinkhydroxid, Zinkoxalat oder Zinkcarbonat. Nachteilig bei nasschemischen Methoden ist gewöhnlich, dass die erzeugten Zinkoxidpartikel zu größeren Einheiten agglomerieren, die speziell in kosmetischen Anwendungen unerwünscht sind. Ferner sind Verunreinigungen durch Prozess- und Ausgangsmaterialien nicht oder nur sehr schwierig aus dem fertigen Produkt zu entfernen.

Der Prozess, gewöhnlich als batch-Prozess ausgeführt, umfasst Filtration, Trocknung und gegebenenfalls Vermahlung der Partikel und ist relativ kostenintensiv ist.

Gasphasenprozesse oder pyrogene Prozesse ermöglichen eine kostengünstigere Herstellung. Hierzu zählt beispielsweise der französische Prozess, nach dem Zinkoxid großtechnisch hergestellt werden kann.

Bei diesen Prozessen erfolgt eine Oxidation von Zinkdampf. Nachteilig hierbei ist die Bildung großer Aggregate aus Primärpartikeln und eine niedrige BET-Oberfläche.

Ein gegenüber diesem Stand der Technik verbessertes Produkt und verbesserte Verfahren werden beispielsweise in US 6,335,002, DE-A-10212680, WO 2005/028565 und JP63-147823 beschrieben.

Aus US 6,335,002 ist ein Verfahren zur Herstellung von Zinkoxidpulver bekannt, bei dem Zinkdampf mittels eines Inertgases in eine Oxidationszone überführt wird, wo er in einer Atmosphäre aus einem oxidierenden Gas, welches Sauerstoff und Wasserdampf enthält, oxidiert wird. Eine solche Atmosphäre kann auch erzeugt werden durch Verbrennung eines sauerstoffhaltigen Gases mit Wasserstoff oder Propan, wobei ein Überschuss an Sauerstoff verwendet wird. Zinkdampf sowie das Gemisch Sauerstoff/Wasserdampf werden getrennt mittels Düsen in einen Reaktor eingedüst, in dem die Oxidation stattfindet. Nachteilig bei diesem Verfahren ist, dass bei Erzeugung und Zuführung des Zinkdampfes in die Oxidationszone der Zinkdampf bereits mit vorhandenen Spuren von Sauerstoff reagieren und Zinkoxidkeime bilden kann, die das spätere Produkt uneinheitlich machen können. Weiterhin sind die im angegebenen Verfahren als bevorzugt genannten Temperaturen relativ hoch. Will man Verluste an BET-Oberfläche durch Versinterung der Primärpartikel vermeiden, so muss die Zinkkonzentration im Reaktionsstrom niedrig gehalten werden, was unter wirtschaftlichen Aspekten nicht wünschenswert ist.

Aus DE-A-10212680 ein Verfahren zur Herstellung von Zinkoxidpulver bekannt, bei dem Zinkpulver in vier aufeinander folgenden Reaktionszonen in Zinkoxidpulver umgewandelt wird. Diese vier Zonen sind: Verdampfungszone, Nucleirungszone, Oxidationszone und Quenchzone. In der Verdampfungszone wird das Zinkpulver in einer Flamme aus Luft und/oder Sauerstoff und einem Brenngas, bevorzugt Wasserstoff, verdampft, wobei keine Oxidation des Zinkpulvers eintritt. In der Nucleirungszone wird das heiße Reaktionsgemisch aus der Verdampfungszone auf Temperaturen unterhalb des Siedepunktes von Zink abgekühlt. In der Oxidationszone wird das Gemisch aus der Nucleirungszone mit Luft und/oder Sauerstoff oxidiert. In der Quenchzone wird das Oxidationsgemisch durch Zugabe von Kühlgas abgekühlt. Nachteilig bei diesem Verfahren ist die Abkühlung des Zinkdampfes, die nur aufwändig zu kontrollieren ist und wirtschaftlich nicht sinnvoll ist.

Aus WO 2005/028565 ist ein Verfahren zur Herstellung von Zinkoxidpulver bekannt, bei dem ein Gemisch, welches Zinkdampf, ein Brenngas und die Reaktionsprodukte aus der Oxidation des Brenngases mit einem Sauerstoff enthaltenden Gas enthält, in einer Flamme mit einem stöchiometrischen Überschuss eines sauerstoffhaltigen Gases umsetzt. Bei Verwendung von Wasserstoff als Brenngas entsteht als Reaktionsprodukt Wasser. Das heiße Reaktionsgemisch wird anschließend in einer Quenchzone abgekühlt und das Zinkoxidpulver vom Gasstrom abgetrennt.

Aus JP 63-147823 ist ein Verfahren bekannt, bei dem über die Oberfläche der Zinkschmelze ein Gemisch aus Inertgas und Brenngas geführt wird, welches Zinkdampf in eine Oxidationszone überführt. Nachteilig an diesem Verfahren ist, dass auf die offenbarte Weise eine geregelte, definierte Zinkdampfdosierung nicht möglich ist. Die Austauschfläche zwischen Inertgas/Brenngas und dem Zinkdampf ist gering und dadurch ist der in die Oxidationszone geleitete Strom nicht mit einer konstanten Zinkdampfmenge beladen. Die kann zu einer Reduzierung der Ausbeute und zu einer Verminderung der Produktqualität führen.

Der Stand der Technik beschreibt verschiedene Möglichkeiten der Gasphasensynthese, mit dem Ziel eine höhere BET-Oberfläche, eine bessere Transparenz und einen höheren UV-Schutz zu erzielen. Letztendlich haben alle diese Versuche die Oxidation von Zinkdampf gemeinsam. Der zitierte Stand der Technik zeigt, dass bei sonst gleichen Einsatzstoffen bereits kleine Änderungen im Prozess zu unterschiedlichen Zinkoxidpulvern führen. Die steigenden Anforderungen bezüglich der Einheitlichkeit und Feinteiligkeit der Zinkoxidpulver, machen eine stetige Verbesserung der Verfahren notwendig. Insbesondere neigen die bekannten Verfahren zu Anbackungen in der Verdampfungszone und Oxidationszone, die nachfolgend aufwändig abgetrennt werden müssen.

Aufgabe der vorliegenden Erfindung ist es daher, ein verbessertes Verfahren zur Herstellung von Zinkoxidpulver bereitzustellen, welches die Nachteile des Standes der Technik vermeidet.

Gegenstand der Erfindung ist ein Verfahren zur Herstellung von Zinkoxidpulver, umfassend die Schritte

a) Erzeugen eines Zinkdampf enthaltenden Stromes in einer Verdampfungszone
b) Oxidation des Zinkdampfes durch Reaktion mit einem Sauerstoff enthaltenden Gas unter Bildung von Zinkoxidpulver in einer Oxidationszone,
c) Abkühlung des Reaktionsgemisches mittels Wasser oder eines Inertgases und Abtrennung des Zinkoxidpulvers in einer Abkühlungs-/Isolierungszone,

dadurch gekennzeichnet, dass man

aa) in der Verdampfungszone einen Gasstrom aus einem Inertgas und einem Brenngas durch eine Zinkschmelze leitet, die eine Temperatur von 450 bis <900°C, bevorzugt 750 bis 850°C aufweist, unter Bildung von Zinkdampf, wobei der Anteil an Brenngas 1 bis 50 Vol.-%, bevorzugt 3 bis 30 Vol-%, bezogen auf die Summe von Inertgas und Brenngas, beträgt und wobei der molare Quotient von Zinkdampf zu Brenngas 0,01 bis 50, bevorzugt 10 bis 30 beträgt und

bb) in der Oxidationszone zu dem Gasstrom aus Zinkdampf, Brenngas und Inertgas einen zweiten Gasstrom, der ein Sauerstoff enthaltendes Gas und Wasserdampf umfasst, in einer Menge gibt, dass die Temperatur in der Oxidationszone von 500 bis 1100°C, bevorzugt 750 bis 1000°C und besonders bevorzugt 800 bis 900°C beträgt, wobei

- der Gehalt an Sauerstoff wenigstens ausreicht um alles Brenngas aus der Verdampfungszone und den Zinkdampf umzusetzen,

- der Wasserdampf durch die Reaktion eines Brenngases mit dem Sauerstoff enthaltenden Gas erzeugt wird, das in die Oxidationszone geführt wird.

Als Brenngas können bevorzugt Wasserstoff, Methan, Ethan, Propan, Butan und/oder Erdgas eingesetzt werden, wobei Wasserstoff besonders bevorzugt ist.

Das Zink, das zur Erzeugung des Zinkdampfes eingesetzt wird, weist bevorzugt eine Reinheit von wenigstens 99,5 Gew.-% auf. Dabei beträgt vorteilhafterweise der Anteil an Blei höchstens 100 ppm, an Arsen 15 ppm, an Cadmium 75 ppm, an Eisen 1000 ppm, an Antimon 5 ppm und an Quecksilber 5 ppm. Entsprechende Werte gelten für das nach dem erfindungsgemäßen Verfahren hergestelltem Zinkoxid.

Das in der Oxidationszone eingeführte Sauerstoff enthaltende Gas weist vorzugsweise einen Überschuss an Sauerstoff, bezogen auf die zu oxidierende Menge an Zinkdampf und Brenngas, auf. Der lambda-Wert der definiert ist als Quotient aus Sauerstoffanteil des Sauerstoff enthaltenden Gases, dividiert durch die Summe von Zinkdampf und Brenngas, jeweils in mol/h, beträgt vorzugsweise 1 bis 20 und besonders bevorzugt 3 bis 10.

Die mittlere Verweilzeit in der Oxidationszone beträgt vorzugsweise 5 bis 1000 Millisekunden.

Die Abkühlung des Reaktionsgemisches erfolgt vorzugsweise mit einem Gemisch aus Luft und Wasser, wobei das Gemisch vorzugsweise eine Zusammensetzung von 2-100 m³ Luft/kg Wasser aufweist. Das Luft/Wasser-Gemisch eignet sich ideal zur raschen Abkühlung des Reaktionsstromes.

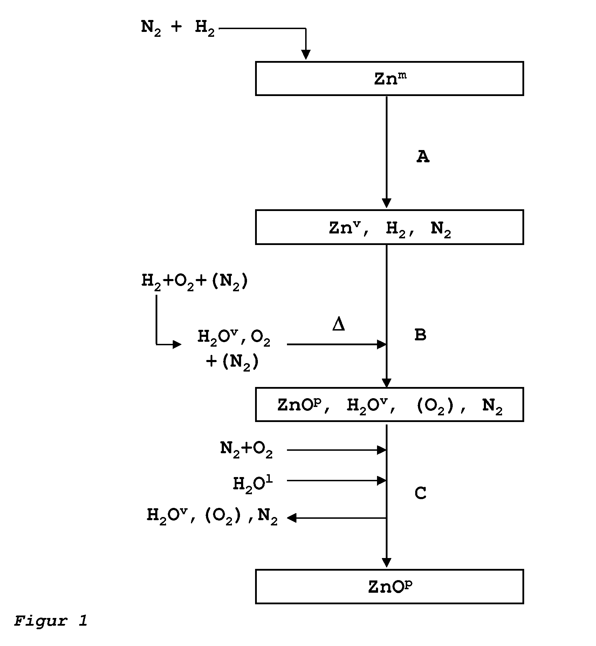

Figur 1 zeigt schematisch das erfindungsgemäße Verfahren. Dabei bedeutet: p = Pulver, m = Schmelze, v = Dampf, 1 = Flüssig, Δ = Energiezufuhr, A = Verdampfungszone, B= Oxidationszone, C = Abkühlungs-/Isolierungszone.

**Beispiele**

Die BET-Oberfläche wird bestimmt nach DIN 66131.

Bestimmung des Grit-Anteiles: Es werden ca. 5 g Pulver mit VE-Wasser wird auf ca. 100 g aufgefüllt.Die Probe wird mit einem Labordissolver fünf Minuten bei 2000 U/min vordispergiert. Anschließend wird fünf Minuten mit dem Ultra Turrax bei 10000 U/min dispergiert. Nach Beendigung der Dispergierung wird die Dispersion über ein 45 μm-Sieb gegeben. Danach wird das Sieb zum Trocknen in einen Umlufttrockenschrank gegeben (T = 100-120 °C). Nach ca. 15 Minuten ist der Siebrückstand trocken und kann ausgewogen werden.

$$\% \; \text{Grit} > 45 \; \mu m = [\text{Gewicht Partikel} > 45 \; \mu m \; (g) \; / \; \text{Einwaage Pulver (g)}] * 100$$

Beispiel 1 (gemäß Erfindung): Durch eine auf 850°C erhitzte Zinkschmelze wird ein Gemisch aus 32 mol/h Stickstoff und 1,7 mol/h Wasserstoff geleitet, wodurch 39 mol/h Zink verdampft werden. Das Gemisch aus Zinkdampf, Stickstoff und Wasserstoff wird in eine Oxidationszone geleitet. Weiterhin werden in die Oxidationszone die Reaktionsprodukte aus der Reaktion von 1563 mol/h Luft und 357 mol/h Wasserstoff geleitet. Die Reaktionsprodukte setzen sich zusammen aus 1305 mol/h Stickstoff, 357 mol/h Wasserdampf und 168 mol/h Sauerstoff. Die durch die Reaktion erzeugte Wärme und die aus der Oxidation von Zinkdampf mit Sauerstoff erzeugt Wärme führt zu einer Temperatur in der Oxidationszone von 880°C. Die mittlere Verweilzeit in der Oxidationszone beträgt 51 ms. Das Reaktionsgemisch wird in einem nachfolgenden Abkühlungsschritt mittels 167 mol/h Wasser und 2232 mol/h Luft auf eine Temperatur von 300°C abgekühlt und das entstandene Zinkoxidpulver an Filtern abgeschieden.

Das nach dem erfindungsgemäßen Verfahren hergestellte Pulver weist eine BET-Oberfläche von 30 m$^2$/g und keinen Grit-Anteil auf.

Beispiel 2 (Vergleichsbeispiel) wird analog Beispiel 1 durchgeführt, jedoch enthält das durch die Zinkschmelze geleitete Gas-Gemisch keinen Wasserstoff.

Beispiel 3 (Vergleichsbeispiel) wird analog Beispiel 2 durchgeführt, jedoch enthält die Oxidationszone keinen Wasserdampf.

Beispiel 4 (Vergleichsbeispiel) wird analog Beispiel 1 durchgeführt, jedoch werden Luft und Wasserstoff in solchen Mengen gewählt, dass eine Temperatur in der Oxidationszone von 1242°C gegenüber 850°C in Beispiel 1 resultiert.

Alle Einsatzstoffe und Einsatzmengen sowie analytische Daten der Zinkoxidpulver sind in Tabelle 1 wiedergegeben.

Das erfindungsgemäße Verfahren erlaubt die Herstellung hochoberflächigen Zinkoxidpulvers, das keinen oder nur einen geringen Grit-Anteil aufweist.

**Tabelle 1: Einsatzstoffe und Einsatzmengen; Analytische Daten der Zinkoxidpulver**

| Beispiel | | 1 | 2 | 3 | 4 |
|---|---|---|---|---|---|
| **Verdampfer** | | | | | |
| Stickstoff | Mol/h | 32 | 36 | 40 | 30 |
| Wasserstoff | Mol/h | 1,7 | 0,0 | 0,0 | 1,6 |
| Zink | Mol/h | 39 | 26 | 29 | 29 |
| Temperatur | °C | 850 | 830 | 830 | 840 |
| Zink/Brenngas | mol/mol | 23,6 | - | - | 18,3 |
| Stickstoff/Brenngas | mol/mol | 19,0 | - | - | 19,0 |
| **Flamme** | | | | | |
| Luft | Mol/h | 1563 | 1518 | 446 | 1339 |
| Wasserstoff | Mol/h | 357 | 170 | 0 | 268 |
| **Oxidation** | | | | | |
| Stickstoff | Mol/h | 1305 | 1199 | 353 | 1058 |
| Wasserdampf | Mol/h | 357 | 170 | 0 | 268 |
| Sauerstoff | Mol/h | 168 | 234 | 94 | 147 |
| Temperatur | °C | 880 | 722 | 952 | 1242 |
| Sauerstoff /(Zink+Brenngas) | mol/mol | 4,1 | 9,0 | 3,2 | 4,8 |

(fortgesetzt)

| Oxidation | | | | | |
|---|---|---|---|---|---|
| Verweilzeit | ms | 51 | 129 | 362 | 93 |
| **Quench** | | | | | |
| Wasser | Mol/h | 167 | 133 | 56 | 444 |
| Luft | mol/h | 2232 | 1339 | 446 | 1786 |
| Luft/Wasser | $m^3$/kg | 17 | 13 | 10 | 5 |
| Temperatur | °C | 300 | 270 | 204 | 318 |
| **Analytik** | | | | | |
| BET | $m^2$/g | 30, 0 | 21, 0 | 17 | 12 |
| Grit | Gew.-% | 0,0 | 0,2 | 0,25 | 0,68 |

**Patentansprüche**

1. Verfahren zur Herstellung von Zinkoxidpulver umfassend die Schritte

   a) Erzeugen eines Zinkdampf enthaltenden Stromes in einer Verdampfungszone
   b) Oxidation des Zinkdampfes durch Reaktion mit einem Sauerstoff enthaltenden Gas unter Bildung von Zinkoxidpulver in einer Oxidationszone,
   c) Abkühlung des Reaktionsgemisches mittels Wasser oder eines Inertgases und Abtrennung des Zinkoxidpulvers in einer Abkühlungs-/Isolierungszone,

   **dadurch gekennzeichnet, dass** man

   aa) in der Verdampfungszone einen Gasstrom aus einem Inertgas und einem Brenngas durch eine Zinkschmelze leitet, die eine Temperatur von 750°C bis 850°C aufweist, unter Bildung von Zinkdampf, wobei der Anteil an Brenngas 1 bis 50 Vol.-%, bezogen auf die Summe von Inertgas und Brenngas, beträgt und wobei der molare Quotient von Zinkdampf zu Brenngas 0,01 bis 50, beträgt und
   bb) in der Oxidationszone zu dem Gasstrom aus Zinkdampf, Brenngas und Inertgas einen zweiten Gasstrom, der ein Sauerstoff enthaltendes Gas und Wasserdampf umfasst, in einer Menge gibt, dass die Temperatur in der Oxidationszone von 500 bis 1100°C beträgt, wobei

   - der Gehalt an Sauerstoff wenigstens ausreicht um alles Brenngas aus der Verdampfungszone und den Zinkdampf umzusetzen,
   - der Wasserdampf durch die Reaktion eines Brenngases mit dem Sauerstoff enthaltenden Gas erzeugt wird, das in die Oxidationszone geführt wird.

2. Verfahren nach Anspruch 1, **dadurch gekennzeichnet, dass** das Sauerstoff enthaltende Gas in einem Überschuss in die Oxidationszone geführt wird.

3. Verfahren nach den Ansprüchen 1 oder 2, **dadurch gekennzeichnet, dass** die mittlere Verweilzeit in der Oxidationszone 5 bis 1000 Millisekunden ist.

4. Verfahren nach den Ansprüchen 1 bis 3, **dadurch gekennzeichnet, dass** die Abkühlung durch ein Gemisch aus Luft und Wasser erfolgt.

$N_2 + H_2$

$Zn^m$

A

$Zn^v$, $H_2$, $N_2$

$H_2+O_2+(N_2)$

$H_2O^v, O_2$
$+ (N_2)$

$\Delta$

B

$ZnO^p$, $H_2O^v$, $(O_2)$, $N_2$

$N_2+O_2$

$H_2O^1$

$H_2O^v, (O_2), N_2$

C

$ZnO^p$

*Figur 1*

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6335002 B
- DE 10212680 A
- WO 2005028565 A
- JP 63147823 A